**Europäisches Patentamt**

**European Patent Office**

**Office européen des brevets**

(11) Veröffentlichungsnummer: **0 175 257**
**A2**

(12) ## EUROPÄISCHE PATENTANMELDUNG

(21) Anmeldenummer: **85111387.8**

(51) Int. Cl.⁴: **G 01 N 27/20**

(22) Anmeldetag: **09.09.85**

(30) Priorität: **21.09.84 DE 3434801**
**18.01.85 DE 3501614**

(43) Veröffentlichungstag der Anmeldung: **26.03.86**
**Patentblatt 86/13**

(84) Benannte Vertragsstaaten: **AT BE CH DE FR GB IT LI LU NL SE**

(71) Anmelder: **INTERATOM Internationale Atomreaktorbau GmbH, Friedrich-Ebert-Strasse, D-5060 Bergisch Gladbach 1 (DE)**

(72) Erfinder: **Neuelmann, Rolf, Dipl.-Ing., Mozartstrasse 5, D-5060 Bergisch-Gladbach (DE)**
Erfinder: **Fortmann, Manfred, Dipl.-Ing., Christian-Heesen-Strasse 17, D-5063 Overath (DE)**

(74) Vertreter: **Mehl, Ernst, Dipl.-Ing. et al, Postfach 22 01 76, D-8000 München 22 (DE)**

(54) **Verfahren zur Strukturüberwachung durch Messen elektrischer Grössen und Vorrichtung sowie Messkopf zur Durchfürung der Verfahrens.**

(57) Es wird ein Verfahren und eine Vorrichtung zur präzisen und reproduzierbaren Strukturüberwachung durch Messen elektrischer Größen vorgeschlagen. Gemessen wird der Spannungsabfall ($U_R$) zwischen zwei Meßpunkten (13, 14) eines von einem Wechselstrom ($I\sim$) durchflossenen Bauteils (1). Zur störungsfreien Messung dieser Spannung ($U_R$) wird diese einem Lock-in-Verstärker (6) zugeleitet, wobei die Fläche der entstehenden Leiterschleife zur Vermeidung von induktiven Störungen möglichst klein gehalten wird. Eine zusätzlich in einem Meßkopf (10) integrierte Leiterschleife (19, 11, 16a, 16b, 21) mißt die Änderung des in der Nähe der Meßstelle vorhandenen magnetischen Wechselfeldes als Induktionsspannung $U_X$. Diese Induktionsspannung $U_X$ ist bis auf eine Phasenverschiebung von 90° dem Strom an der Meßstelle proportional, so daß dieser gleichzeitig mit der abfallenden Spannung ($U_R$) bestimmt werden kann. Fernerhin kann die induzierte Spannung ($U_X$) als Frequenz- und Phasenreferenz dem Lock-in-Verstärker (6) zugeleitet werden, wodurch die Genauigkeit und Reproduzierbarkeit der Messungen verbessert wird. Durch Wahl geeigneter Frequenzen des Wechselstromes ($I\sim$) können sehr genaue Messungen vom Rißtiefen und anderen Beschädigungen durchgeführt werden.

INTERATOM GmbH
5060 Bergisch Gladbach 1

VPA HP6726E

## Verfahren zur Strukturüberwachung durch Messen elektrischer Größen und Vorrichtung sowie Meßkopf zur Durchführung des Verfahrens

Die vorliegende Erfindung betrifft ein Verfahren zur Strukturüberwachung durch Messen elektrischer Größen, gemäß dem Oberbegriff des Anspruchs 1, sowie Vorrichtungen zur Durchführung des Verfahrens. Bei der Überwachung z.B. von Bauteilen aus elektrisch leitfähigen Materialien werden unter anderem auch elektrische Eigenschaften gemessen. Beispielsweise ändert sich der elektrische Widerstand eines Materials, wenn sich darin Risse oder andere Inhomogenitäten bilden. Von dieser Erkenntnis wird beispielsweise bei der Wirbelstromprüfung von Bauteilen Gebrauch gemacht.

Die bisher bekannten Methoden der Strukturüberwachung durch Messen elektrischer Größen eignen sich jedoch nicht für alle Anwendungsfälle und sind oft nicht mit genügender Präzision durchführbar. Insbesondere bei der Überwachung oder periodischen Untersuchung von hochbelasteten Strukturen auf Ermüdungserscheinungen, zum Beispiel Mikrorisse, gibt es bisher keine präzisen und doch einfachen Meßverfahren für die elektrischen Eigenschaften.

Aus der WO 83/03675 ist zwar schon eine Methode zur Bauteilüberwachung durch Messen von elektrischen Spannungen bekannt, jedoch ist die Reproduzierbarkeit und Genauigkeit der Messungen für manche Anwendungsfälle nicht ausreichend.

Khf/Bt 19.06.85

Aufgabe der vorliegenden Erfindung ist demgemäß ein Verfahren zur Strukturüberwachung durch Messen elektrischer Größen, welches eine besonders hohe Präzision und Aussagekraft erreicht. Das Verfahren soll insbesondere auch für kontinuierliche Untersuchungen an heißen Strukturen geeignet sein, andererseits aber auch einen mobilen Einsatz erlauben. Aufgabe der Erfindung ist auch eine geeignete Vorrichtung und ein entsprechender Meßkopf zur Durchführung des Verfahrens.

Zur Lösung dieser Aufgabe wird ein Verfahren nach dem Hauptanspruch vorgeschlagen. Wird ein Bauteil mit einem elektrischen Wechselstrom beaufschlagt, so fließt dieser Strom in Abhängigkeit von der Frequenz hauptsächlich in einem Bereich nahe der äußeren Oberfläche der Struktur. Weist die Oberfläche der Struktur in einigen Bereichen Inhomogenitäten, zum Beispiel Risse auf, so hat dies einen erhöhten elektrischen Widerstand zur Folge, so daß in diesen Bereichen eine höhere Spannung pro Längeneinheit abfällt als in unbeschädigten Bereichen. Zur präzisen Messung des elektrischen Widerstandes zwischen zwei Meßpunkten muß daher die dort abfallende Spannung möglichst genau gemessen werden. Bei solchen Messungen haben sich bisher zwei Probleme ergeben. Einerseits erzeugt der in der Struktur fließende Wechselstrom ein um die Struktur umlaufendes magnetisches Wechselfeld, welches in den Meßleitungen eine Störspannung erzeugen kann. Um dies zu vermeiden, wird vorgeschlagen, daß die Meßleitungen, mit denen die Spannung zwischen zwei Meßpunkten abgegriffen wird, möglichst nahe aneinander verlegt und miteinander verdrillt werden, so daß sich eine Leiterschleife mit nur sehr kleiner induktiv wirksamer Fläche bildet. Auf diese Weise können Störungen durch Magnetfelder bis auf vernachlässigbare Werte verringert werden. Andererseits sind die Stromverteilung im Bauteil und die Phasenlage des Wechselstromes nicht immer genügend konstant bzw. bekannt. Dies hat sich, insbesondere bei höheren Frequenzen, als Problem erwiesen, da Änderungen in der Frequenz, der Stromstärke und sogar in der Lage der elektrischen Zuleitungen zu der Struktur die Phasenbeziehung veränderten. Als Abhilfe wird dementsprechend im Hauptanspruch weiterhin vorgeschlagen, daß möglichst nahe bei den Meßpunkten die Änderung des durch den Wechselstrom erzeugten magnetischen Flusses mittels einer Leiterschleife als Induktionsspannung gemessen wird. Diese Induktionsspannung entspricht bis auf eine Phasenverschiebung von $90^{\circ}$ genau dem an der Meßstelle fließenden Wechselstrom. Mit dieser erfindungsgemäßen Anordnung können gut reproduzierbare Messungen gemacht werden, da nunmehr sowohl Spannung wie Strom einschließlich ihrer Phasenlagen an der Meßstelle bekannt sind, woraus sich z.B. der lokale Widerstand ermitteln läßt.

In weiterer Ausgestaltung der Erfindung wird im Anspruch 2 vorgeschlagen, daß die oben beschriebene Messung unter gleichen Bedingungen mit gleichartigen Meßanordnungen nacheinander oder gleichzeitig in dem zu untersuchenden Bereich und an einer unbelasteten bzw. unbeschädigten Referenzmeßstelle durchgeführt wird. Durch die Messung an einer Referenzmeßstelle, deren Eigenschaften genau bekannt sind und im Vergleich dazu an einer zu untersuchenden Stelle können die meisten systematischen Fehler ausgeschaltet werden. Von Bedeutung ist nur das Verhältnis der einzelnen Meßergebnisse zu den Referenzmessungen.

Ferner wird im Anspruch 3 vorgeschlagen, die abgegriffenen Spannungen mittels eines frequenz- und phasenselektiven Verstärkers, eines sogenannten Lock-in-Verstärkers, zu messen. Bei sehr kleinen mit Störungen behafteten Wechsel-

0175257

VPA **P 6 7 2 6 E**

spannungen ist diese Meßmethode besonders vorteilhaft. Der Lock-in-Verstärker kann bewirken, daß die abgegriffenen Spannungen nur mit ganz bestimmten Phasenbeziehungen untereinander bzw. zu dem Wechselstrom im Bauteil selektiert und verstärkt werden. Aus den Absolutwerten der abgegriffenen Spannungen und/oder den Phasenlagen lassen sich für den Zustand des Bauteils signifikante Daten ableiten.

In spezieller Ausgestaltung der Erfindung wird im Anspruch 4 vorgeschlagen, daß im Lock-in-Verstärker bei jeder Messung eine automatische Phasennachstellung vorgenommen wird, so daß die jeweilige Spannung immer um genau $90^{\circ}$

0175257

VPA 84 P 6 7 2 6 E

phasenverschoben zu ihrer zugehörigen Induktionsspannung gemessen wird. Dies vereinfacht den Meßvorgang
und ermöglicht die automatische Abtastung vieler Meßstellen nacheinander durch einen Lock-in-Verstärker, beispielsweise unter Zuhilfenahme eines üblichen Digital-Multiplexers.

In weiterer Ausgestaltung der Erfindung wird im Anspruch
5 vorgeschlagen, daß die in der zusätzlichen Leiterschleife durch das magnetische Wechselfeld am Meßort erzeugte Induktionsspannung genau gemessen und das
Verhältnis der Induktionsspannung zu dem um 90$^{\circ}$ phasenverschobenem Spannungsabfall am Meßort als Maß für die
Schädigung der Struktur gebildet wird. Die in der Leiterschleife durch das magnetische Wechselfeld induzierte
Spannung ist bis auf die Phasenverschiebung proportional
dem an der Meßstelle fließenden Wechselstrom. Dies bedeutet, daß man bei dem erfindungsgemäßen Verfahren gleichzeitig den Strom und die Spannung an der Meßstelle bis auf
einen von der Meßanordnung abhängenden Proportionalitätsfaktor messen kann. Daraus läßt sich bei Kenntnis des
Proportionalitätsfaktors direkt der Widerstand des Materials an der Meßstelle entsprechend dem Ohmschen Gesetz
ausrechnen. Zur Bestimmung dieses jeweiligen Widerstandes
in einem zu untersuchenden Bereich ist daher weder eine
Referenzmessung noch eine genaue Kenntnis der Stromverteilung in der Struktur nötig, da die notwendigen Meßwerte
lokal gewonnen werden können. Dies erhöht die Präzision
und Reproduzierbarkeit der Messung ganz bedeutend. Weitere
Einzelheiten werden anhand der Zeichnung erläutert.

Im Anspruch 6 wird eine Vorrichtung zur Durchführung des
Verfahrens vorgeschlagen, welche ebenfalls anhand der
Zeichnung näher erläutert wird. Wesentlich ist, daß die
Meßleitungen mit denen der Spannungsabfall an der Meßstelle abgegriffen wird nur eine Schleife mit möglichst

0175257
VPA 84 P 6 7 2 6 E

kleiner induktiv wirksamer Fläche bilden, wodurch Störungen ausgeschaltet werden. Fernerhin muß die Vorrichtung eine zusätzliche Leiterschleife zur Messung der Änderungen des magnetischen Flusses aufweisen.

Gemäß Anspruch 7 kann diese Vorrichtung zu Referenzzwecken doppelt ausgeführt werden.

Weitere Ausgestaltungen der Erfindung, insbesondere ein robust aufgebauter Meßkopf zur Durchführung des Verfahrens werden in den Ansprüchen 8 bis 13 beschrieben und anhand eines Ausführungsbeispiels in der Zeichnung näher erläutert. Erfindungsgemäße Meßköpfe können entweder als mobile Sonden oder auch als festangebrachte, beispielsweise angeschweißte Instrumentierung zur Dauerüberwachung eines Bauteils ausgebildet werden. Da eine fest montierte Sonde Dehnungen des Bauteils ohne Beschädigung mitmachen muß, sollte die Sonde in einem geeigneten Material eingegossen sein. Hier bieten sich je nach dem Temperaturbereich der Anwendung verschiedene Materialien an, welche dem Fachmann geläufig sind. Auch vorgefertigte Einheiten, die in einfacher Weise auf verschweißte Meßstifte geschraubt werden, sind möglich.

Je nach den gewünschten Eigenschaften kann man die Sonde so bauen, daß die zusätzliche Leiterschleife Dehnungen des Bauteils, d. h. Abstandsänderungen der Meßpunkte als Vergrößerung ihrer Fläche mitmacht oder auch nicht.

Ein Ausführungsbeispiel der Erfindung sowie Darstellungen zur Erläuterung der prinzipiellen Wirkungsweise der Erfindung sind in der Zeichnung dargestellt, und zwar zeigen

Figur 1 einen erfindungsgemäßen Meßkopf mit schematisch dargestellter Meßanordnung,

Figur 2 eine schematische Ansicht von oben auf den Meßkopf,

0175257

VPA 84 P 6 7 2 6 E

Figur 3    eine schematische Seitenansicht des Meßkopfes
           mit Halterung,

Figur 4    den prinzipiellen Meßaufbau zur Veranschaulichung der physikalischen Grundlagen der
           Messung und

Figur 5    den prinzipiellen Aufbau des Meßkopfes.


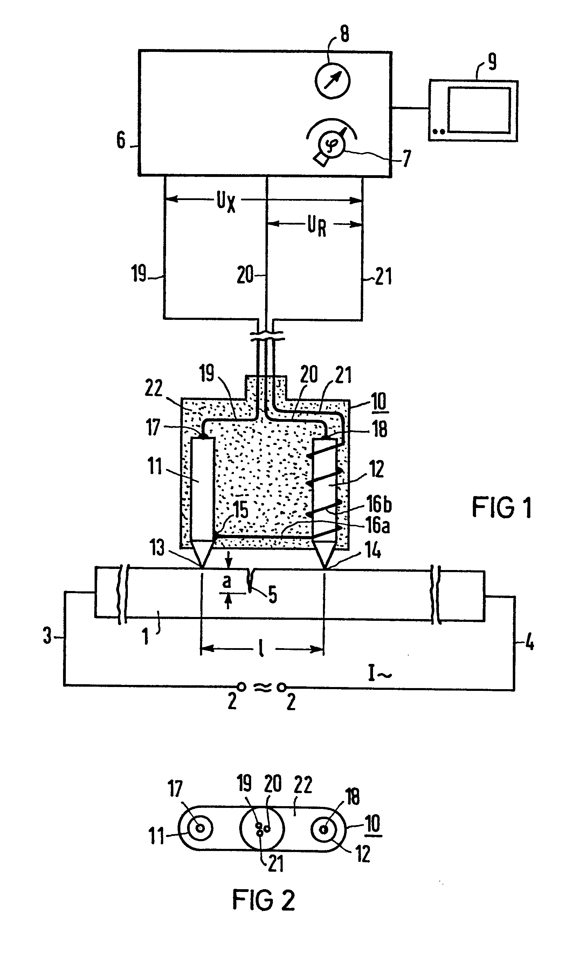

Figur 1 zeigt ein elektrisch leitendes Bauteil 1, welches
an eine Wechselstromquelle 2 mittels Zuleitungen 3, 4
angeschlossen ist, so daß es von einem Wechselstrom I~
durchflossen werden kann. Die Stromflußrichtung sollte
aus Gründen der Meßgenauigkeit in Belastungsrichtung des
Bauteils gewählt werden. In dem Bauteil können möglicherweise Materialfehler, z. B. kleine Risse 5 vorhanden sein,
welche festgestellt werden sollen, wobei insbesondere
auch ihre Tiefe a von Interesse ist. Zu diesem Zweck wird
ein Meßkopf 10 auf die zu untersuchende Struktur 1 aufgesetzt. Die Meßsonde weist zwei elektrisch leitende
Stifte 11, 12 auf, welche an ihrem unteren Ende mit
Spitzen 13, 14 versehen sind. An dem stromdurchflossenen
Bauteil 1 fällt, entsprechend der Stromstärke, pro Längeneinheit eine bestimmte Spannung ab. Die Meßspitzen 13, 14
mit dem Abstand l greifen diese Spannung über dem zu untersuchenden Bereich ab. Je mehr Risse 5 oder sonstige
Fehler das Bauteil 1 aufweist, desto größer ist die abgegriffene Spannung. Allerdings ist die zu messende
Spannung sehr klein und wegen verschiedener Störungen
und eines immer vorhandenen Rauschens nur mit einer besonderen Meßvorrichtung zu messen. Diese Meßvorrichtung
besteht aus einer geeigneten Meßelektronik 6, vorzugsweise mit einem phasenselektiven

Verstärker, einem sogenannten Lock-in-Verstärker . Dieser Verstärker verstärkt selektiv nur die mit der Meßfrequenz und einer bestimmten Phase zu dieser Meßfrequenz ankommenden Signale. Einem solchen Lock-in-Verstärker 6 wird die an den Spitzen 13, 14 abgegriffene Spannung zugeleitet. Dabei wird die Fläche zwischen den beiden Zuleitungen so klein wie irgend möglich gemacht. Zu diesem Zweck weist der eine Meßstift 11 an seinem unteren Ende, möglichst nahe der Spitze 13, einen Abgriff 15 auf, von welchem eine elektrisch isolierte Leitung 16a möglichst nahe über der Oberfläche des Bauteils 1 zu dem anderen Stift 12 geführt ist. Um diesen Stift 12 wird die Leitung dann in einem wendelförmigen Abschnitt 16b nach oben geführt. Die zweite Zuleitung zu dem Lock-in-Verstärker 6 beginnt an einem Abgriff 18 am oberen Ende des Meßstiftes 12, von wo eine Zuleitung 20 zum Lock-in-Verstärker 6 führt. Auch die Leitung 16b setzt sich dort in einer Zuleitung 21 zum Lock-in-Verstärker 6 fort. Anders als in Figur 1 dargestellt sollten die Leitungen 20, 21, gegebenenfalls zusammen mit der Leitung 19 stark verdrillt sein, um Einflüsse durch elektromagnetische Streufelder zu verringern. Die Leitungen 20, 21 bilden den Meßeingang des Lock-in-Verstärkers zur Messung der Spannnung $U_R$ zwischen den Meßspitzen 13, 14.

Fernerhin benötigt der Lock-in-Verstärker noch eine Information über die Phase $\varphi$ , mit welcher die Meßspannung in Bezug auf die Wechselspannungsquelle 2 selektiert werden soll. Prizipiell könnte diese Information dem Lock-in-Verstärker 6 von der Wechselspannungsquelle 2 zugeführt werden, jedoch hat sich gezeigt, daß der Strom in dem Bauteil 1 gegenüber der Stromquelle 2, insbesondere auch je nach Verlegung der Zuleitungen 3, 4, phasenverschoben sein kann. Erfindungsgemäß wird daher die Information über die Phasenlage des Wechselstromes ebenfalls direkt an der Meßstelle gewonnen. Dazu weist der Meßkopf 10 in seinem Inneren eine Leiterschleife auf, welche aus dem Meßstab 11, dem Leitungsabschnitt 16a, dem wendelförmigen Leitungsabschnitt 16b und der Leitung 19 gebildet wird. In dieser Leiterschleife wird entsprechend der Änderung des magnetischen Flusses $\phi$ eine Spannung $U_X$ induziert, welche als Referenzsignal für die Phaseninformation genutzt werden kann. Die Spannung $U_X$ wird mit Hilfe der Leitung 21 und am Abgriff 17 beginnenden Leitung 19 dem Lock-in-Verstärker zugeführt. Die zu messende Spannung $U_R$ muß immer $90^O$ phasenverschoben zu der Spannung $U_X$ sein, was sich am Lock-in-Verstärker 6 mittels eines Phasenreglers 7 entsprechend einstellen läßt. Der nunmehr frequenzselektiv mit dieser Phase von $90^O$ gemessene Wert von $U_R$ kann in einem Meßinstrument 8 angezeigt oder zur weiteren Verarbeitung und Auswertung einem Rechner 9 zugeführt werden. Der Rechner kann gegebenenfalls in Verbindung mit dem Lock-in-Verstärker für eine selbständige Nachstellung der Phase $\phi$ bei veränderten Betriebsbedingungen sorgen. Umgekehrt kann aber auch die Spannung $U_X$ mit entsprechender Phasenverschiebung zu der Spannung $U_R$ gemessen werden, wodurch der lokale Widerstand am Meßort bestimmbar wird.

Der Meßkopf selbst sollte als stabile Einheit aufgebaut sein, wobei sie beispielsweise in einem Block 22 aus geeignetem Material eingegossen sein kann. Dieses Material sollte temperaturbeständig, aber gegenüber thermischen Dehnungen auch elastisch sein. Ein geeignetes Material ist beispielsweise Wasserglas.

In Figur 2 ist zur Veranschaulichung eine schematische Ansicht von oben auf den Meßkopf dargestellt. In einem Block 22 eingegossen sind die Stifte 11, 12 mit den Zuleitungen und der Leiterschleife. Die aus dem Kopf her-

0175257

ausführenden drei Leitungen 19, 20, 21 sind vorzugsweise stark miteinander verdrillt. Ein solcher Meßkopf kann, wie bisher beschrieben, als mobile Sonde eingesetzt sein, wodurch nacheinander verschiedene Stellen einer Struktur untersucht werden können.

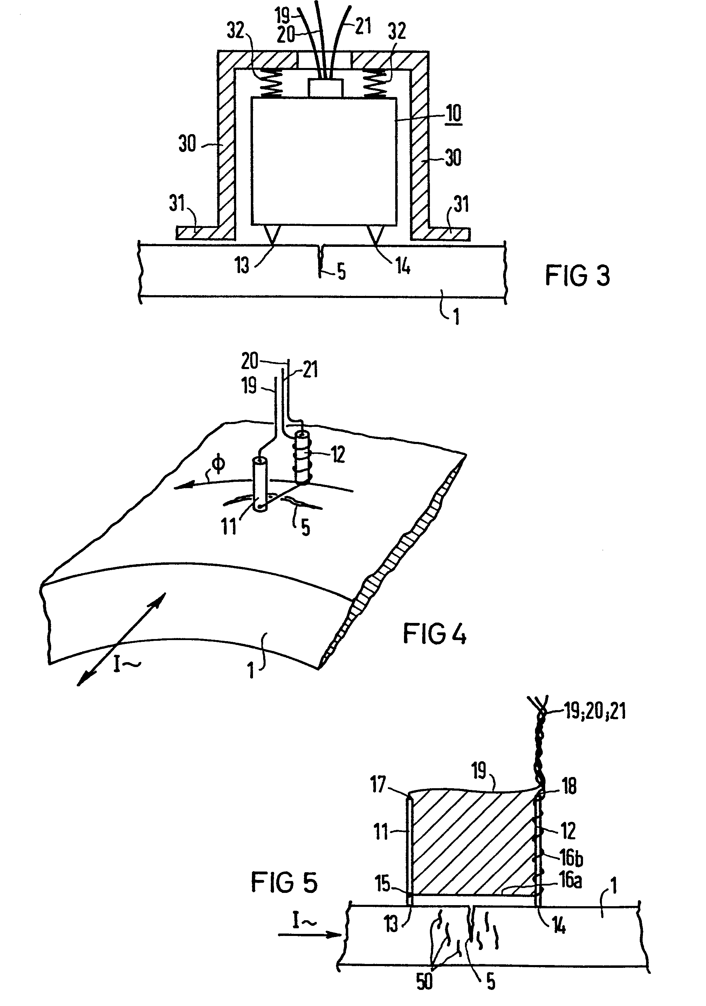

In Figur 3 ist eine besondere Halterung für eine erfindungsgemäße Meßsonde vorgeschlagen, welche ein reproduzierbares Aufsetzen mit einem definierten Druck auf die Struktur ermöglicht. Dazu wird die Sonde 10 in einem Halterahmen 30, 31 angeordnet, an dem sie sich mittels Druckfedern oder anderer elastischer Elemente 32 abstützt. Der Rahmen weist Füße 31 auf, welche gegen das Bauteil 1 gepreßt werden können. Diese Füße 31 können beispielsweise auch mit Magneten oder mit Haltebändern oder dergleichen zur Befestigung an einer Struktur ausgerüstet sein. Der Halterahmen 30, 31 sollte vorzugsweise aus elektrisch nicht leitendem Material bestehen, um die Messung nicht zu beeinflussen.

Statt einer mobilen Sonde können selbstverständlich auch ortsfeste Meßköpfe verwendet werden, wobei statt der Meßspitzen 13, 14 aufgeschweißte oder anders dauerhaft an der Struktur befestigte Stifte verwendet werden können. Das Meßprinzip bleibt hiervon unberührt. Weiterhin ist es auch besonders günstig, eine gleichartige Referenzsonde an einer unbeschädigten bzw. unbelasteten Stelle der Struktur zu verwenden, um statt einer Absolutmessung eine Differenzmessung durchführen zu können. Dies steigert die Aussagekraft der Messung.

Die physikalischen Verhältnisse bei der Messung werden nochmals anhand der Figuren 4 und 5 erläutert. Das Bauteil 1 wird von einem Wechselstrom $I_\sim$ in Pfeilrichtung durchflossen. Dies führt zu einem magnetischen Wechselfeld $\phi$

senkrecht zur Stromrichtung. Entsprechend den Maxwellschen Gleichungen ist der magnetische Fluß in der Nähe einer bestimmten, zu untersuchenden Stelle des Bauteils proportional dem an dieser Stelle fließenden Strom. Das magnetische Wechselfeld induziert in einer Leiterschleife eine Spannung, welche um 90$^o$ phasenverschoben ist. Man kann daher den an einer bestimmten Stelle der Struktur fließenden Wechselstrom mit Hilfe des durch ihn erzeugten magnetischen Wechselfeldes messen. Dazu benötigt man eine Leiterschleife, in welcher eine dem magnetischen Wechselfeld proportionale, jedoch um 90$^o$ phasenverschobene Spannung $U_X$ erzeugt wird. Die Spannung $U_X$ enthält daher die Information über die Stromstärke an der betreffenden Stelle in dem Bauteil 1. Greift man gleichzeitig an diese Stelle des Bauteils 1 über einer bestimmten Länge die Spannung $U_R$ ab, so kann man aus diesen beiden Informationen den Widerstand pro Länge berechnen, d.h. eine Art "spezifischen Widerstand" der Struktur bei der bestimmten Meßfrequenz. Aus dem Widerstand an der Meßstelle lassen sich Rückschlüsse über die Schädigung in diesem Bereich und gegebenenfalls über die Rißtiefe ziehen, wie weiter unten anhand einiger Beispiele erläutert wird.

In Figur 5 ist noch einmal der Meßkopf in schematischer Darstellung gezeigt, wobei die Fläche der Leiterschleife schraffiert ist. Diese Fläche, die begrenzt wird von dem Stift 11, den Leitungen 16a, 16b und 19 bestimmt die Größe der Spannung $U_X$. Die Fläche sollte so gewählt werden, daß $U_X$ und $U_R$ in der gleichen Größenordnung sind, so daß Fehler am Lock-in-Verstärker durch Meßbereichsumschaltung nicht auftreten. Gegebenenfalls, wenn beispielsweise die Bauhöhe der Sonde dies erfordert, könnte die Leiterschleife auch aus zwei oder mehr Windungen mit geringerer Fläche bestehen. Dies würde am Meßprinzip nichts ändern. Auch

0175257

ist es gleichgültig, an welche Stelle der Sonde die Meßleitungen 19, 20, 21 nach außen geführt werden sofern diese nur stark miteinander verdrillt sind, um Störeinflüsse auszuschalten. Überhaupt empfiehlt sich die Verwendung von stark miteinander verdrillten Leitungen, insbesondere auch für die Zuleitungen von der Wechselstromquelle zum Bauteil 1, soweit dies möglich ist.

Ein bestimmter erhöhter Widerstand an einer Meßstelle kann, wie in Figur 5 angedeutet, auf einen großen Riß 5 oder auf mehrere kleine Schäden 50 zurückzuführen sein. Hier wird man im allgemeinen aus dem gemessenen Widerstand eine äquivalente Rißtiefe entsprechend vorherigen Referenzmessungen bestimmen, wobei durch konservative Annahmen der jeweils ungünstigste Bauteilzustand, der diesen Widerstand haben könnte, unterstellt wird.

Folgende theoretischen Ansätze liegen der Erfingung zugrunde:
Gemessen wird bei einer geeigneten fest vorgewählten Frequenz F, welche je nach Material und gewünschter Eindringtiefe gewählt wird.

Die gesuchte Information über den Materialzustand ergibt sich aus dem "spezifischen Widerstand" $\rho'$ an der zu untersuchenden Stelle. Der "spezifische Widerstand" $\rho$ des unbeschädigten Materials bei der Meßfrequenz F ist bekannt oder kann durch eine Referenzmessung bestimmt werden. Enthält das Material an der zu untersuchenden Meßstelle Risse oder andere Schäden, so erhöht sich der Widerstand $\rho'$, läßt allerdings keine direkten Schlüsse auf die Art der Schädigung zu. Durch Veränderung der Meßfrequenz F kann die Strompfadtiefe $\sigma$, d. h. die Eindringtiefe des Wechselstromes $I_\sim$ in die Struktur verändert werden nach der

der Beziehung $\sigma = \sqrt{\dfrac{\rho}{\mu_r \cdot \mu_0 \cdot F \cdot \pi}}$ mit

$\mu_r$ = relative Permeabilität des Materials

$\mu_0$ = Permeabilitätskonstante,

woraus weitere Informationen über die Art der Schädigung gewonnen werden können.

Bei einem konstanten Wechselstrom $I_\sim$ kann die Messung der Änderung des Widerstandes $\rho'$ in erster Näherung auf eine Spannungsmessung $U_R$ über zwei Meßpunkten im Abstand 1 zurückgeführt werden. Dabei muß jedoch eine unveränderliche Stromdichteverteilung in der Struktur unterstellt werden, was nicht immer richtig ist. Besser ist es, an der Meßstelle sowohl die Spannung $U_R$ wie auch den dort fließenden Strom $I_{mess}$ zu messen, um daraus nach dem Ohm'schen Gesetz

$$\rho' = \frac{U_R \cdot 1}{I_{mess}} \quad \text{zu bestimmen.}$$

Die Bestimmung von $I_{mess}$ erfolgt durch eine nahe der Meßstelle liegende Leiterschleife, in der die Änderung $d\emptyset$ des von dem Strom $I_{mess}$ erzeugten magnetischen Flusses $\emptyset$ eine Spannung $U_X$ induziert.

Die Höhe der Spannung $U_X$ hängt noch von der Fläche und ggf. der Windungszahl der Leiterschleife ab, was durch eine Sondenkonstante $C_{Sonde}$ berücksichtigt wird (Ist die Fläche der Leiterschleife nicht parallel zur Verbindungslinie der Meßpunkte für $U_R$ und/oder nicht senkrecht zur Strukturoberfläche angeordnet, müssen noch geometrische Faktoren berücksichtigt werden).

Es ergibt sich somit $\rho' = \dfrac{U_R}{U_X} \cdot C_{Sonde}$, wobei $C_{Sonde}$ z. B. durch Referenzmessungen bestimmt wird. Da $U_X$ um $90°$ phasenverschoben zu $U_R$ ist, muß dies bei der Verhältnisbildung berücksichtigt werden, was z. B. in einem Lock-in-Verstärker mit großer Genauigkeit möglich ist.

Der so bestimmte Wert von   ist weitgehend störungsfrei meßbar und gut geeignet als Kennzeichnung des Materialzustandes.

Besonders einfach wird die Auswertung der Messung, wenn man $U_R$ und $U_X$ als komplexe Spannungen mit Real- und Imaginärteil in einem beliebigen Bezugssystem mißt, nämlich:

$$\overline{U_R} = \text{Realteil}(\overline{U_R}) + i \cdot \text{Imaginärteil}(\overline{U_R})$$
$$\overline{U_X} = \text{Realteil}(\overline{U_X}) + i \cdot \text{Imaginärteil}(\overline{U_X}) \ .$$

Durch Umrechnung lassen sich daraus die Darstellungen von $U_R$ und $U_X$ in Polarkoordinaten in dem Bezugssystem gewinnen, nämlich:

$$\overline{U_R} = (\,|U_R|\,,\varphi_R) \quad \text{und} \quad \overline{U_X} = (\,|U_X|\,,\varphi_X) \ .$$

Der komplexe "spezifische Widerstand" $\overline{\rho}$ an der Meßstelle ergibt sich aus

$$\overline{\rho} = \frac{U_R}{U_X} \cdot e^{\,i(\varphi_R - \varphi_X + 90^\circ)} \quad ,$$

wobei der Realteil von $\overline{\rho}$ sich ergibt zu

$$\text{Realteil } \overline{\rho} = |\overline{\rho}| \cdot \cos\,(\varphi_R - \varphi_X + 90^\circ) \ .$$

Aus diesem Wert läßt sich, gegebenenfalls im Vergleich zu einer Referenzmeßstelle, direkt eine Aussage über den Materialzustand und die Tiefe eventueller Risse machen.

Die erfindungsgemäße Sonde eignet sich über die ausdrücklich beschriebenen Anwendungen hinaus auch für andere Messungen. So kann z.B. mit dem Verfahren auch die Wanddicke von Rohren überwacht werden, oder es können Materialparameter wie Temperatur und dergleichen bestimmt werden, dies u.U. auch an Schmelzen oder Flüssigkeiten.

Verfahren zur Strukturüberwachung durch Messen elektrischer Größen und Vorrichtung sowie Meßkopf zur Durchführung des Verfahrens

Patentansprüche

1. Verfahren zur Strukturüberwachung durch Messen elektrischer Größen, wobei z. B. ein elektrisch leitendes Bauteil (1) mit einem Wechselstrom ($I_\sim$) vorgebbarer Frequenz beaufschlagt und der Spannungsabfall ($U_R$) über einzelnen Teilbereichen gemessen wird, g e k e n n z e i c h n e t   d u r c h folgende Merkmale:

   a) Der Spannungsabfall ($U_R$) über jeweils zwei Meßpunkten (13, 14) mit einem vorgebbaren Abstand (1) wird mittels zweier Meßleitungen (20, 21) abgegriffen, die in Verbindung mit dem Bauteil (1) eine Leiterschleife mit möglichst kleiner induktiv wirksamer Fläche bilden.

   b) Möglichst nahe bei den Meßpunkten (13, 14) wird die Änderung des durch den Wechselstrom ($I_\sim$) erzeugten magnetischen Flusses ($\emptyset$) mittels einer etwa parallel zur Stromrichtung und senkrecht zum magnetischen Fluß ($\emptyset$) liegenden Leiterschleife (19, 11, 16a, 16b, 21) als Induktionsspannung ($U_X$) abgegriffen.

   c) Die beiden abgegriffenen Spannungen ($U_R$, $U_X$) werden, gegebenenfalls nach Vorverstärkung, einer Auswerteelektronik (6) zugeleitet, welche daraus und gegebenenfalls unter Berücksichtigung der Phasenbeziehungen dieser Spannungen untereinander bzw. zu dem Wechselstrom ($I_\sim$) den lokalen Widerstand des Bauteils (1)

Khf/Bt 19.06.85

an der Meßstelle und/oder andere für den Bauteilzustand signifikante Größen ableitet.

2. Verfahren nach Anspruch 1,
d a d u r c h   g e k e n n z e i c h n e t ,
daß die Messung unter gleichen Bedingungen mit gleichartigen Meßanordnungen nacheinander oder gleichzeitig
in dem zu untersuchenden Bereich und an einer unbelasteten
bzw. unbeschädigten Referenzmeßstelle durchgeführt wird.

3. Verfahren nach Anspruch 1 oder 2,
d a d u r c h   g e k e n n z e i c h n e t ,
daß die Auswerteelektronik (6) einen frequenz- und
phasenselektiven Verstärker, einen sogenannten Lock-in-
Verstärker, beinhaltet, der die Phasenbeziehungen zwischen
dem Wechselstrom ($I_\sim$) und den abgegriffenen Spannungen
($U_R$, $U_X$) mißt bzw. konstant hält.

4. Verfahren nach Anspruch 3,
d a d u r c h   g e k e n n z e i c h n e t ,
daß eine automatische Phasennachstellung am Lock-in-
Verstärker bei jeder Messung vorgenommen wird, so daß
der jeweilige Spannungsabfall ($U_R$) immer um genau $90^O$
phasenverschoben zu seiner jeweils zugehörigen Induktionsspannung ($U_X$) gemessen wird.

5. Verfahren nach einem der vorhergehenden Ansprüche,
d a d u r c h   g e k e n n z e i c h n e t ,
daß die Induktionsspannung ($U_X$) ebenfalls genau gemessen
und das Verhältnis der Induktionsspannung ($U_X$) zum $90^O$
phasenverschobenen Spannungsabfall ($U_R$) als Maß für die
Schädigung bzw. Veränderung des Bauteils (1) gebildet
wird.

6. Vorrichtung zur Durchführung des Verfahrens nach einem der vorhergehenden Ansprüche mit einer Wechselstromquelle (2), mit welcher ein Bauteil (1) mit einem Wechselstrom ($I\sim$) beaufschlagbar ist, und einer Auswerteelektronik (6), in welcher an dem Bauteil (1) abgegriffene Spannungen ($U_R$) verarbeitet werden können, g e k e n n z e i c h n e t   d u r c h folgende Merkmale:

a) Die Meßleitungen (20, 21) mit denen der Spannungsabfall ($U_R$) abgegriffen wird, bilden in Verbindung mit dem Bauteil (1) und anderen elektrisch leitenden Teilen (16a, 16b, 12) der Vorrichtung eine Leiterschleife mit möglichst kleiner induktiv wirksamer Fläche.

b) Die Vorrichtung weist zusätzlich eine Leiterschleife (19, 11, 16a, 16b, 21) auf, vorzugsweise etwa parallel zur Richtung des Wechselstromes ($I\sim$) und senkrecht zur Richtung des durch den Wechselstrom ($I\sim$) erzeugten magnetischen Flusses ($\emptyset$), mit der die Änderung des magnetischen Flusses ($\emptyset$) als Induktionsspannung ($U_X$) meßbar ist.

c) Die Leiterschleife (19, 11, 16a, 16b, 21) liegt möglichst nahe den Meßpunkten (13, 14) und möglichst nahe über der Oberfläche des Bauteils (1).

d) Die Auswerteelektronik (6) beinhaltet Mittel zur gleichzeitigen, quasi-gleichzeitigen oder alternierenden Messung der Meßspannung ($U_X$), der Induktionsspannung ($U_R$) unter Berücksichtigung ihrer Phasenbeziehungen untereinander und/oder in Bezug auf den Wechselstrom ($I\sim$).

7. Vorrichtung nach Anspruch 6, d a d u r c h   g e k e n n z e i c h n e t, daß mindestens zwei gleichartige Meßsysteme vorhanden sind, von denen eines als Referenz an einer Stelle des Bauteils (1) mit bekannten Eigenschaften angebracht ist, während das bzw. die andere(n) Meßsystem(e) an der (bzw. den) zu untersuchenden Stelle(n) angebracht ist (bzw. sind).

8. Meßkopf zu der Vorrichtung nach dem Anspruch 6 oder 7, g e k e n n z e i c h n e t   d u r c h folgende Merkmale:

a) Der Meßkopf (10) weist zwei Kontaktstifte (11, 12) auf, welche mit dem Bauteil (1) an den Meßpunkten (13, 14) elektrisch leitend verbunden oder verbindbar sind.

b) Die zu dem einen Stift (12) führende Meßleitung (20) endet an dessen oberem Ende (18).

c) Die zu dem anderen Stift (11) führende Meßleitung (21) ist im oberen Bereich bis zum oberen Ende (8) des ersten Stiftes (12) mit der ersten Meßleitung (20) verdrillt und in ihrem weiteren Verlauf (16b bzw. 16a) um diesen Stift (12) gewendelt oder nahe dem Stift (12) bzw. nahe der Oberfläche des Bauteils (1) verlegt, wobei sie oben oder unten an   dem anderen Stift (11) an einer Kontaktstelle (15) endet.

d) Der Meßkopf (10) weist zusätzlich eine Leiterschleife auf, welche aus dem Stift (11), dessen am oberen Ende (17) befestigte Zuleitung (19) und der an der Kontaktstelle (15) befestigten Meßleitung (16a, 16b, 21) besteht, wobei die Zuleitung (19) mit den Meßleitungen (20, 21) ebenfalls verdrillt ist.

9. Meßkopf nach Anspruch 8, d a d u r c h   g e k e n n z e i c h n e t , daß der Meßkopf eine kompakte Einheit bildet und gegebenenfalls mit einem elektrisch isolierenden Material, vorzugsweise Wasserglas, vergossen ist.

10. Meßkopf nach Anspruch 8 oder 9,
d a d u r c h   g e k e n n z e i c h n e t ,
daß der Meßkopf (10) als mobile Sonde ausgebildet ist, wobei die Stifte (11, 12) an ihrem unteren Ende mit, gegebenenfalls gehärteten, Spitzen (13, 14) versehen sind, die an das Bauteil (1) andrückbar sind.

11. Meßkopf nach Anspruch 10,
d a d u r c h   g e k e n n z e i c h n e t ,
daß der Meßkopf (10) einen mit Abstützelementen (31) ausgestatteten Halterahmen (30) besitzt, in dem er durch Druckfedern (32) oder ähnlich wirkende elastische Teile nach oben abgestützt ist, wobei die Spitzen (13, 14) in entlastetem Zustand der Druckfedern (32) über die durch die Abstützelemente (31) gebildete Auflagefläche hinausragen.

12. Meßkopf nach Anspruch 8,9 oder 10,
d a d u r c h   g e k e n n z e i c h n e t ,
daß der Meßkopf (10) mit den elektrischen Meßleitungen (16a, 16b, 19, 20, 21) als vorgefertigte Einheit ausgebildet ist, die auf angeschweißte Stifte (11, 12) aufsetzbar und mit diesen, vorzugsweise durch Schrauben, verbindbar und elektrisch kontaktierbar ist.

13. Meßkopf nach Anspruch 8, 9, 10, 11 oder 12,
d a d u r c h   g e k e n n z e i c h n e t ,
daß in den Meßkopf (10) ein Vorverstärker integriert ist.

0175257

FIG 1

FIG 2

0175257

84 P 6726

2/2

FIG 3

FIG 4

FIG 5